# FASCICULE DE BREVET EUROPEEN

(11) **EP 4 349 656 B1**
(45) Date de publication et mention de la délivrance du brevet: **03.09.2025**
(21) Numéro de dépôt: 23200230.3
(22) Date de dépôt: 27.09.2023
(51) Int. Cl.: B60R 9/045

(54) **ENSEMBLE DE BARRES DE TOIT DESTINÉ À ÊTRE POSITIONNÉ SUR LE TOIT D'UN VÉHICULE**
DACHSCHIENENANORDNUNG ZUR POSITIONIERUNG AUF EINEM FAHRZEUGDACH
ROOF RACK ASSEMBLY FOR POSITIONING ON A VEHICLE ROOF

(30) Priorité: 06.10.2022 FR 2210242
(43) Date de publication de la demande: 10.04.2024
(73) Titulaire: NOVARES France, 78140 Vélizy-Villacoublay (FR)
(72) Inventeur: CHENAUD, David, 01100 BELLIGNAT (FR); PERRIN, Raphaël, 01460 BEARD-GEOVREISSIAT (FR); HUGUET, Guillaume, 01250 CHAVANNES SUR SURAN (FR); BRICHET-BILLET, Etienne, 38470 NOTRE DAME DE L OSIER (FR)
(74) Mandataire: Germain Maureau

(56) Documents cités:
- EP-A1- 3 124 328
- WO-A1-2013/045798
- US-A- 5 377 890
- US-A1- 2018 201 199

## Description

La présente invention concerne un ensemble de barres de toit destiné à être positionné sur le toit d'un véhicule.

Il est connu d'utiliser des barres de toit pour supporter, par exemple, un coffre de toit ou un porte-vélos sur le toit d'un véhicule.

Le plus souvent, les barres de toit transversales sont accrochées sur des barres longitudinales fixées au véhicule. La fixation des barres de toit transversales aux barres longitudinales est souvent réalisée au moyen d'un ensemble vis-écrou traversant la barre de toit transversale et la barre longitudinale. De même, il est connu d'utiliser des mâchoires réglables positionnées à chaque extrémité de la barre de toit transversale et configurées pour serrer chacune une barre longitudinale. Pour conserver l'aérodynamisme du véhicule il est nécéssaire qu'en position longitudinale les barres de toit soient proches du toit. Inversement, il est nécessaire qu'en position transversale les barres de toit soient plus éloignées du toit (selon une direction normale au plan du toit) pour permettre le passage d'un système d'accroche d'un accessoire.

Une solution connue du document US2016243994 consiste à utiliser des barres de toit pliables pouvant être fixées sur des rails support solidaires du toit selon deux positions spécifiques, une position de non-fonctionnement, dans laquelle chaque barre de toit est fixée sur un des rails support au niveau d'une première paire de points de fixation, et une position de fonctionnement, dans laquelle chaque barre de toit est fixée sur chacun des rails support au niveau d'une deuxième paire de points de fixation. La fixation des barres de toit sur les rails support s'opère au moyen d'organes de montage pouvant être démontés sans outil. Cette solution impose toutefois que les barres de toit soient successivement démontées et remontées sur les rails support de manière à passer de la position de non-fonctionnement à la position de fonctionnement et inversement. Cette solution n'est donc pas satisfaisante car elle nécessite d'effectuer de nombreuses opérations de manutention, de positionnement précis et de montage des barres de toit, ce qui accroît de manière exagérée le temps de montage. Par ailleurs, cette solution nécessite l'utilisation de barres de toit pliables et la présence d'au moins quatre points de fixation sur les rails support, ce qui accroît de manière importante les coûts de fabrication de l'ensemble de barres de toit. Un ensemble de barre de toit est également connu du document WO 2013/045798 A1 ou du document US 5 377 890 A. La divulgation de ce dernier correspond au préambule de la revendication 1.

En conséquence, la présente invention a pour objectif de fournir un ensemble de barre de toit qui limite le temps de montage tout en réduisant les coûts de fabrication.

Selon une définition générale, l'invention concerne un ensemble de barre de toit comprenant les caractéristiques de la revendication 1.

Ainsi configuré, l'ensemble de barre de toit de l'invention permettra de réduire les coûts de fabrication du fait de l'utilisation d'un unique point de fixation sur l'un des pieds de fixation pour réaliser la fixation à la fois de la deuxième barre dans sa position longitudinale et de la première barre dans sa position transversale.

L'ensemble de barre de toit de l'invention pourra également comprendre une ou plusieurs des caractéristiques suivantes :
- la première barre, respectivement la deuxième barre, peut pivoter autour d'un premier axe de pivotement, respectivement autour d'un deuxième axe de pivotement, qui est éloigné du premier point de fixation, respectivement du deuxième point de fixation, par une première distance, respectivement par une deuxième distance, la première distance étant inférieure à la distance séparant le premier axe de pivotement du deuxième point de fixation et la deuxième distance étant inférieure à la distance séparant le deuxième axe de pivotement du troisième point de fixation.
- l'articulation de la première barre, respectivement de la deuxième barre, comprend une vis en T munie d'une tête disposée au-dessus d'une paroi inférieure de la première barre, respectivement de la deuxième barre, dans laquelle est formée la fente, et d'une tige filetée reçue partiellement dans la fente et dans un alésage formé à travers une paroi supérieure du pied de fixation de la première paire de pieds, respectivement du pied de fixation de la deuxième paire de pieds, qui fait face à ladite paroi inférieure de la première barre, respectivement de la deuxième barre, un écrou étant vissé à l'extrémité libre de la tige filetée, l'écrou venant appuyer contre une rondelle ressort disposée entre ledit écrou et ladite paroi supérieure, plaquant ainsi la tête de la vis en T contre la paroi inférieure de la première barre, respectivement de la deuxième barre.
- la vis en T est logée au moins partiellement à l'intérieur d'une cavité centrale d'un élément de guidage disposé entre la première barre, respectivement la deuxième barre, et le pied de fixation de la première paire de pieds, respectivement le pied de fixation de la deuxième paire de pieds, qui supporte l'articulation, l'élément de guidage comprenant au moins deux ergots disposés de part et d'autre de la tête de la vis en T et configurés pour coulisser à l'intérieur de la fente, la paroi interne de l'élément de guidage qui entoure la cavité centrale étant configurée pour permettre un pivotement de l'élément de guidage par rapport à la vis en T au moins autour d'un axe perpendiculaire à l'axe longitudinal lorsque, la première barre, respectivement la deuxième barre, étant dans sa position longitudinale, les moyens de verrouillage de la première barre, respectivement de la deuxième barre, coopèrent avec les moyens de verrouillage complémentaires du pied de fixation de la première paire de pieds, respectivement du pied de fixation de la deuxième paire de pieds, qui ne supporte pas l'articulation, et au moins autour d'un axe parallèle à l'axe longitudinal lorsque, la première barre, respectivement la deuxième barre, étant dans sa position transversale, les moyens de verrouillage de la première barre, respectivement de la deuxième barre, coopèrent avec les moyens de verrouillage complémentaires du pied de fixation de la deuxième paire de pieds, respectivement du pied de fixation de la première paire de pieds, qui ne supporte pas l'articulation.
- la paroi interne de l'élément de guidage forme un motif de came contre lequel vient s'appuyer la vis en T lors du déplacement de la première barre, respectivement de la deuxième barre, de sa position longitudinale à sa position transversale et réciproquement.
- le pied de fixation de la première paire de pieds, respectivement le pied de fixation de la deuxième paire de pieds, qui supporte l'articulation, est muni d'au moins une forme en saillie dépassant de sa paroi supérieure, ladite au moins une forme en saillie formant une butée contre laquelle vient reposer la paroi inférieure de la première barre, respectivement de la deuxième barre, lorsque ladite première barre, respectivement ladite deuxième barre, est fixée sur l'un des pieds de fixation qui ne supporte pas d'articulation, la fixation de la première barre, respectivement de la deuxième barre, générant un pivotement de ladite première barre, respectivement de ladite deuxième barre, autour de ladite au moins une forme en saillie et, par voie de conséquence, un soulèvement de la tête de la vis en T sous l'effet du déplacement vers le haut de la paroi inférieure de la première barre, respectivement de la deuxième barre, ce qui aboutit à une compression de la rondelle ressort entre l'écrou et la paroi supérieure du pied de fixation de la première paire de pieds, respectivement du pied de fixation de la deuxième paire de pieds, qui supporte l'articulation.
- la vis en T est disposée de manière excentrée par rapport l'axe autour duquel pivote l'élément de guidage lors de la fixation de la première barre, respectivement de la deuxième barre, sur l'un des pieds de fixation qui ne supporte pas d'articulation, la fixation de ladite première barre, respectivement de ladite deuxième barre, générant un soulèvement de la tête de la vis en T sous l'effet du déplacement vers le haut de la paroi inférieure de la première barre, respectivement de la deuxième barre, ce qui aboutit à une compression de la rondelle ressort entre l'écrou et la paroi supérieure du pied de fixation de la première paire de pieds, respectivement du pied de fixation de la deuxième paire de pieds, qui supporte l'articulation.
- le pied de fixation de la première paire de pieds, respectivement le pied de fixation de la deuxième paire de pieds, qui supporte l'articulation est muni d'au moins une forme en saillie et/ou en creux au niveau de sa paroi supérieure, ladite au moins une forme en saillie et/ou en creux formant un chemin de came le long duquel peut se déplacer au moins un ergot inférieur dépassant d'une face inférieure de l'élément de guidage, le déplacement de la première barre, respectivement de la deuxième barre, de sa position longitudinale à sa position transversale et réciproquement génère un déplacement vers le haut et/ou vers le bas de l'élément de guidage lorsque ledit au moins un ergot inférieur se déplace le long dudit chemin de came, ce qui, du fait du contact d'une face supérieure de l'élément de guidage avec la paroi inférieure de la première barre, respectivement de la deuxième barre, produit un soulèvement et/ou un abaissement de ladite première barre, respectivement de ladite deuxième barre, et, par voie de conséquence, un soulèvement de la tête de la vis en T, lequel aboutit à une compression de la rondelle ressort entre l'écrou et la paroi supérieure du pied de fixation de la première paire de pieds, respectivement du pied de fixation de la deuxième paire de pieds, qui supporte l'articulation.
- une zone de la paroi inférieure de la première barre, respectivement de la deuxième barre, qui entoure au moins partiellement la fente, est recouverte d'une pièce de recouvrement formée d'un matériau à faible coefficient de frottement, ladite pièce de recouvrement permettant notamment de limiter les frottements entre la tête de la vis en T et la première barre, respectivement la deuxième barre, lors du coulissement de l'articulation le long de la fente.
- le matériau constitutif de la pièce de recouvrement est choisi parmi le polyoxyméthylène et le polyamide 6.
- la pièce de recouvrement est logée partiellement à l'intérieur d'au moins une rainure formée le long de la périphérie externe d'un des ergots de l'élément de guidage.
- les moyens de verrouillage de la première barre, respectivement de la deuxième barre, comprennent un organe mâle fileté, tel qu'une vis, et les moyens de verrouillage complémentaires du pied de fixation, sur lequel vient se fixer ladite première barre, respectivement ladite deuxième barre, comprennent un organe femelle fileté, tel qu'un écrou.
- les moyens de verrouillage de la première barre, respectivement de la deuxième barre, comprennent une lyre de retenue et un noyau asymétrique lié en rotation dans la lyre de retenue, et les moyens de verrouillage complémentaires du pied de fixation, sur lequel vient se fixer ladite première barre, respectivement ladite deuxième barre, comprennent une ouverture quadrangulaire formée dans la paroi supérieure dudit pied de fixation, lesdits moyens de verrouillage étant configurés de telle sorte que, lors de la rotation du noyau, la lyre de retenue passe d'une position rétractée, dans laquelle elle est amovible de l'ouverture quadrangulaire, à une position expansée, dans laquelle elle est verrouillée dans l'ouverture quadrangulaire.

D'autres caractéristiques et avantages de la présente invention ressortiront clairement de la description détaillée ci-après de deux modes de réalisation de l'invention donnés à titre d'exemples non limitatifs, en référence aux dessins annexés, dans lesquels :
[Fig. 1] est une vue en perspective d'un ensemble de barres de toit selon un mode de réalisation de l'invention, les barres de toit étant dans leur position longitudinale.
[Fig. 2] est une vue de dessus de l'ensemble de barres de toit représenté sur la figure 1.
[Fig. 3] est une vue similaire à la figure 2, les barres de toit ayant pivoté à angle droit par rapport à leur positon longitudinale.
[Fig. 4] est une vue similaire à la figure 2, les barres de toit étant dans leur position transversale.
[Fig. 5a] est une vue agrandie de l'articulation utilisée pour relier de manière pivotante l'une des barres de toit sur l'un des pieds de fixation, la barre de toit étant dans la position longitudinale de la figure 2.
[Fig. 5b] est une vue similaire à la figure 5a, la barre de toit étant dans la position intermédiaire de la figure 3.
[Fig. 5c] est une vue simialire à la figure 5a, la barre de toit étant dans la position transversale de la figure 4.
[Fig. 6a] est une vue en perspective de l'ensemble de barres de toit de la figure 1, les barres de toit étant dans une première position intermédiaire.
[Fig. 6b] est une vue similaire à la figure 6a, les barres de toit étant dans une deuxième position intermédaire.
[Fig. 6c] est une vue similaire à la figure 6a, les barres de toit étant dans une troisième position intermédaire.
[Fig. 6d] est une vue similaire à la figure 6a, les barres de toit étant dans leur position transversale.
[Fig. 7a] est une vue en coupe transversale d'une articulation selon un premier mode de réalisation, la barre de toit étant dans la position représentée sur la figure 1.
[Fig. 7b] est une vue similaire à la figure 7a, la barre de toit étant dans la position représentée sur la figure 6a.
[Fig. 7c] est une vue similaire à la figure 7a, la barre de toit étant dans la position représentée sur la figure 6b.
[Fig. 7d] est une vue similaire à la figure 7a, la barre de toit étant dans la position représentée sur la figure 6c.
[Fig. 7e] est une vue similaire à la figure 7a, la barre de toit étant dans la position représentée sur la figure 6d, l'articulation n'étant pas dans son état verrouillé.
[Fig. 7f] est une vue similaire à la figure 7e, l'articulation étant dans son état verrouillé.
[Fig. 8a] est une vue en coupe transversale d'une articulation selon un deuxième mode de réalisation, la barre de toit étant dans la position représentée sur la figure 6c.
[Fig. 8b] est une vue similaire à la figure 8a, la barre de toit étant dans la position représentée sur la figure 6d, l'articulation étant dans son état verrouillé.
[Fig. 9a] est une vue de dessus en perspective d'un élément de guidage utilisable dans une articulation selon un troisième mode de réalisation.
[Fig. 9b] est une vue de dessous en perspective de l'élément de guidage représenté sur la figure 9a.
[Fig. 9c] est une vue en perspective d'un pied de fixation destiné à coopérer avec l'élément de guidage des figures 9a et 9b.
[Fig. 10a] est une vue en perspective de l'articulation selon le troisième mode de réalisation, l'articulation n'étant pas dans son état verrouillé.
[Fig. 10b] est une vue en coupe transversale de l'articulation de la figure 10a selon le plan de coupe XYZ.
[Fig. 11a] est une vue similaire à la figure 10a, l'articulation étant dans son état verrouillé.
[Fig. 11b] est une vue en coupe transversale de l'articulation de la figure 11a selon le plan de coupe YZ.
[Fig. 12a] est une vue de dessus d'une portion d'une des barres de toit entourant la fente.
[Fig. 12b] est une vue en coupe transversale selon la plan de coupe C1 de la barre de toit représentée sur la figure 12a.
[Fig. 12c] est une vue en coupe transversale selon la plan de coupe C2 de la barre de toit représentée sur la figure 12a.
[Fig. 13] est une vue en coupe transversale d'une portion d'une des barres de toit au niveau de sa liaison démontable avec l'un des pieds de fixation.
[Fig. 14] est une vue en coupe transversable d'un élément de liaison pouvant permettre la liaison démontable des barres de toit sur les pieds de fixation.

Dans le présent texte, le terme « longitudinal » fait référence à une direction parallèle au sens de la longueur du véhicule et le terme « transversal » fait référence à une direction parallèle au sens de la largeur du véhicule. En outre, les termes « avant », « arrière » et « latéral » sont utilisés relativement au sens de la marche du véhicule. Le terme « horizontal » fait référence à une direction ou une surface parallèle au sol lorsque les roues du véhicule sont en contact avec le sol et le terme « vertical » fait référence à une direction ou une surface perpendiculaire au sol lorsque les roues du véhicule sont en contact avec le sol. Les termes « inférieur » et « supérieur », ou « bas » et « haut » font référence à des positions relatives dans le sens vertical. Les expressions « orienté vers l'intérieur » et « orienté vers l'extérieur » font référence à des orientations respectivement dirigées vers le centre du véhicule et s'éloignant du centre du véhicule.

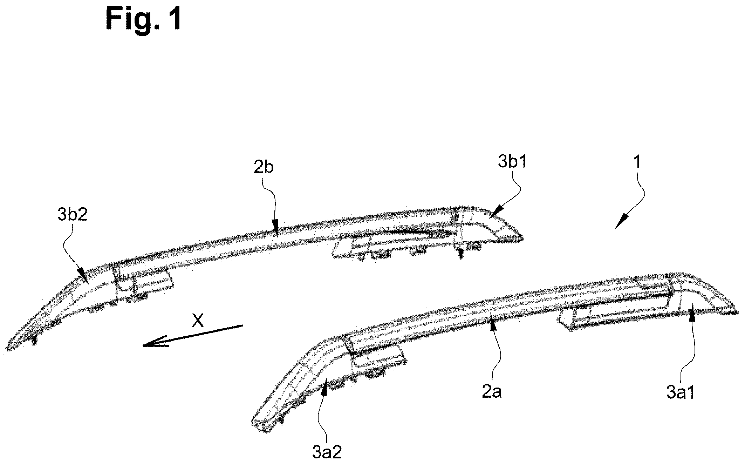

En référence à la figure 1, il est représenté un ensemble 1 de barres de toit selon une première variante de réalisation de l'invention, les barres de toit étant dans une position longitudinale.

L'ensemble 1 de barres de toit comprend notamment deux paires de pieds de fixation destinées à être fixées de chaque côté d'un toit de véhicule, respectivement une première paire de pieds de fixation 3a1, 3a2 destinées à être fixées sur le côté gauche du toit, et une deuxième paire de pieds de fixation 3b1, 3b2 destinées à être fixées sur le côté droit du véhicule. Chaque paire de pieds de fixation comprend un pied de fixation arrière, respectivement les pieds de fixation 3a1 et 3b1, disposé à l'arrière par rapport au sens d'avance du véhicule et un pied de fixation avant, respectivement les pieds de fixation 3a2 et 3b2, disposé à l'avant par rapport au sens d'avance du véhicule. Les pieds de fixation avant et arrière de chacune des paires sont alignés selon une direction parallèle à un axe longitudinal X défini par le véhicule,
L'ensemble 1 de barres de toit comprend en outre une paire de barres de toit s'étendant respectivement entre le pied de fixation arrière et avant d'une des paires de pieds de fixation, respectivement une première barre de toit 2a s'étendant entre le pied de fixation arrière 3a1 et le pied de fixation avant 3a2 et une deuxième barre de toit 2b s'étendant entre le pied de fixation arrière 3b1 et le pied de fixation avant 3b2.

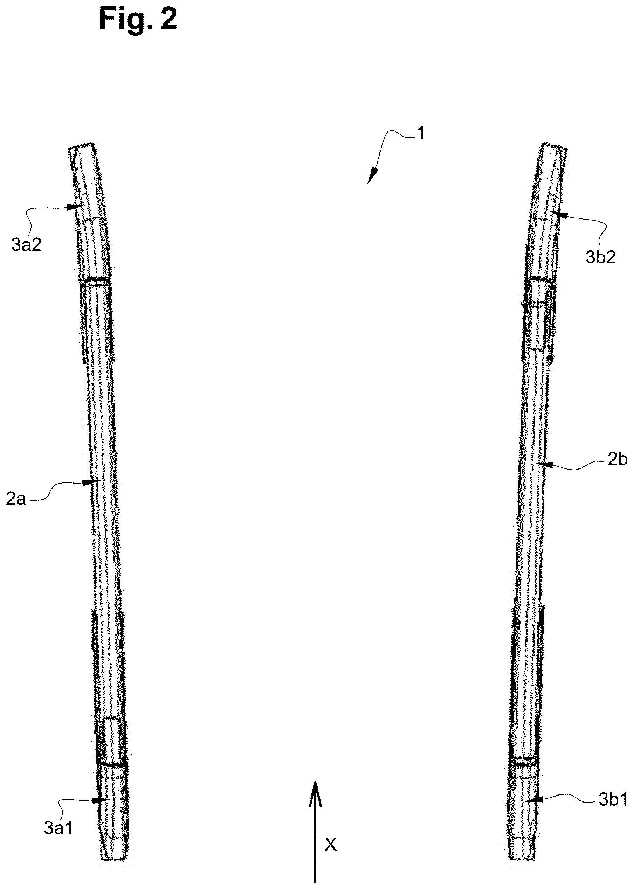

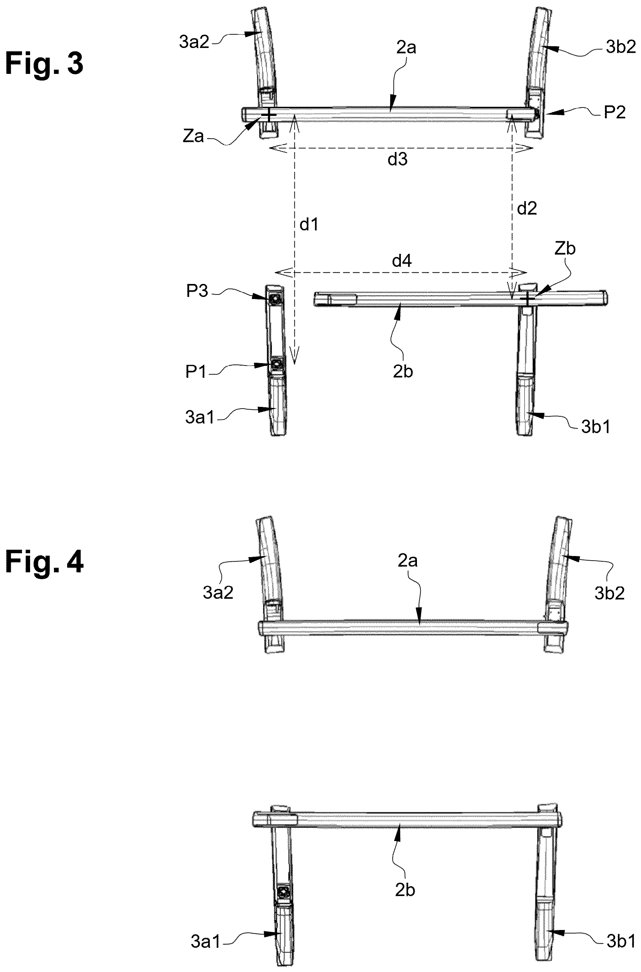

Chaque barre de toit 2a, 2b est reliée à l'un des pieds de fixation de l'une des paires de pieds de fixation au moyen d'une articulation de manière à pouvoir se positionner selon au moins deux positions d'utilisation spécifiques, respectivement une position longitudinale, représentée notamment sur la figure 2, dans laquelle elle est parallèle à l'axe longitudinal X, et une position transversale, représentée notamment sur la figure 4, dans laquelle elle est orientée perpendiculairement audit axe longitudinal X.

Pour effectuer le transfert de leur position longitudinale à leur position transversale, les barres de toit 2a, 2b effectuent d'abord un pivotement autour d'un axe de pivotement pour se positionner à angle droit par rapport à leur position longitudinale, comme représenté sur la figure 3. Dans la configuration représentée sur la figure 3, l'axe de pivotement Za de la première barre de toit 2a est positionné au niveau du pied de fixation avant 3a2 et l'axe de pivotement Zb de la deuxième barre de toit 2b est positionné au niveau du pied de fixation arrière 3b1. Il faut constater que la position relative des axes de pivotement Za et Zb ne permet pas aux barres de toit 2a, 2b d'atteindre des points de fixation spécifiques, référencés P2 et P3 sur la figure 3, positionnés respectivement sur le pied de fixation avant 3b2 et sur le pied de fixation arrière 3a1. Ces points de fixation P2 et P3 correspondent respectivement aux positions dans lesquelles des moyens de verrouillage intégrés dans la première barre de toit 2a, respectivement dans la deuxième barre de toit 2b, peuvent coopérer avec des moyens de verrouillage complémentaires intégrés dans le pied de fixation avant 3b2, respectivement dans le pied de fixation arrière 3a1, de manière à assurer une fixation démontable desdites barres de toit 2a, 2b sur lesdits pieds de fixation 3b2, 3a1 lorsqu'elles sont dans leur position transversale. En particulier, la première barre de toit 2a est configurée de telle sorte que l'axe de pivotement Za de la première barre de toit 2a est éloigné par une distance d1 d'un point de fixation P1 positionné sur le pied de fixation arrière 3a1, ledit point de fixation P1 correspondant à la position dans laquelle les moyens de verrouillage intégrés dans la première barre de toit 2a peuvent coopérer avec des moyens de verrouillage complémentaires intégrés dans le pied de fixation arrière 3a1 de manière à assurer une fixation démontable de la première barre de toit 2a sur ledit pied de fixation arrière 3a1 lorsqu'elle est dans sa position longitudinale. Or, cette distance d1 est inférieure à la distance d3 séparant l'axe de pivotement Za du point de fixation P2. De manière similaire, la deuxième barre de toit 2b est configurée de telle sorte que l'axe de pivotement Zb de la deuxième barre de toit 2b est éloigné par une distance d2 du point de fixation P2 positionné sur le pied de fixation avant 3b2, ledit point de fixation P2 correspondant à la position dans laquelle les moyens de verrouillage intégrés dans la deuxième barre de toit 2b peuvent coopérer avec des moyens de verrouillage complémentaires intégrés dans le pied de fixation avant 3b2 de manière à assurer une fixation démontable de la deuxième barre de toit 2b sur ledit pied de fixation avant 3b2 lorsqu'elle est dans sa position longitudinale. Or, cette distance d2 est inférieure à la distance d4 séparant l'axe de pivotement Zb du point de fixation P3.

En référence à la figure 4, il est représenté la position finale des barres de toit 2a, 2b une fois qu'elles ont été translatées parallèlement à elles-mêmes depuis leur position intermédiaire représentée sur la figure 3. Ce mouvement de translation a permis d'aligner les moyens de verrouillage intégrés dans les barres de toit 2a, 2b avec les moyens de verrouillage complémentaires intégrés dans les pieds de fixation avant 3b2 et arrière 3a1 respectivement.

L'ensemble 1 de barres de toit ainsi configuré présente l'avantage d'utiliser un même point de fixation, à savoir le point de fixation P2, pour réaliser la fixation de la première barre de toit 2a dans sa position transversale et la fixation de la deuxième barre de toit 2b dans sa position longitudinale. Cette configuration permet donc de limiter le nombre de points de fixation par rapport aux ensembles de barres de toit de l'art antérieur qui nécessitent la présence de quatre points de fixation.

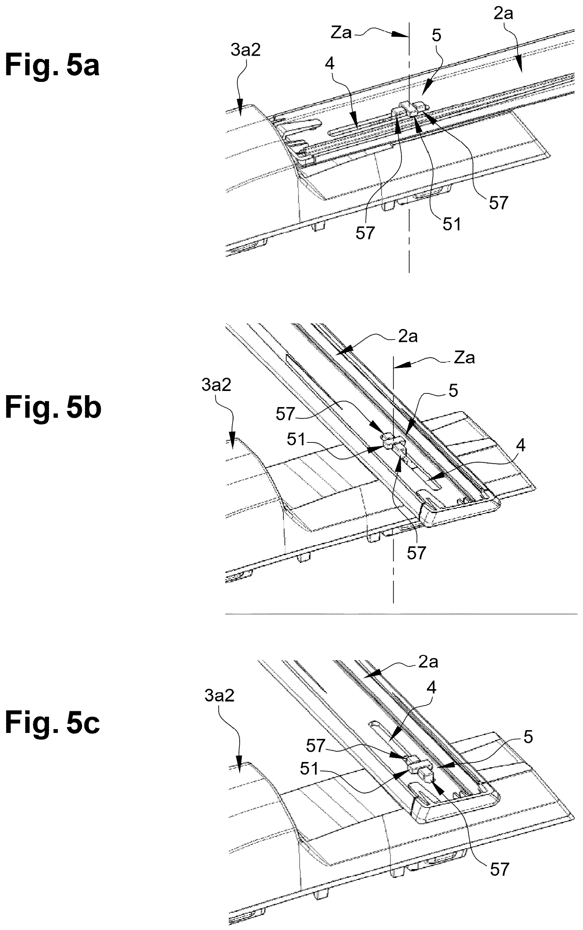

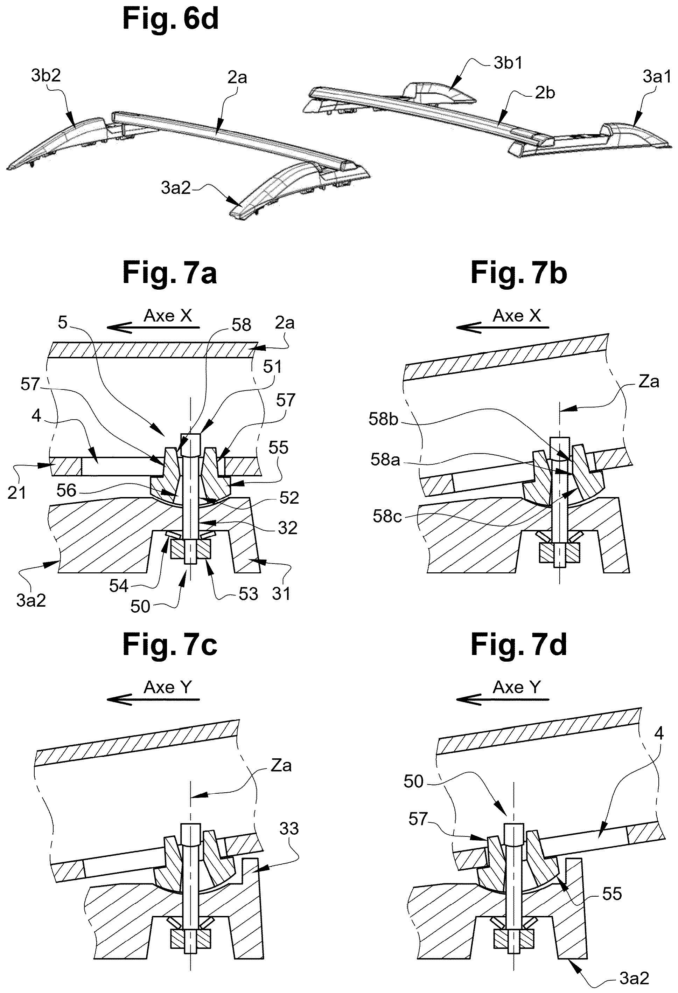

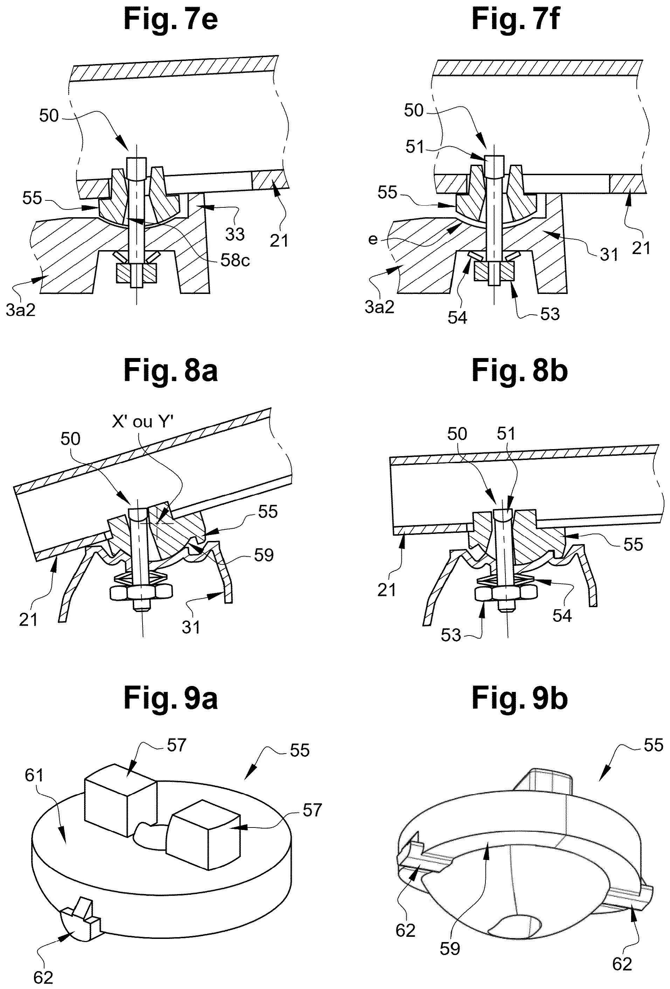

Une solution spécifique permettant de réaliser ce mouvement à la fois de rotation et de translation de la première barre de toit 2a est représentée sur les figures 5a à 5c, ainsi que sur la figure 7a. Cette solution est également utilisée pour réaliser le mouvement de rotation et de translation de la deuxième barre de toit 2b. Pour faciliter la compréhension du système, la barre de toit 2a, telle que représentée sur les figures 5a à 5c, a été amputée de sa partie haute de manière à voir l'articulation autour de laquelle elle pivote.

Cette solution consiste à munir une paroi inférieure 21 de la barre de toit 2a d'une fente 4 le long de laquelle peut coulisser l'articulation 5 autour de laquelle peut pivoter la barre de toit 2a par rapport au pied de fixation avant 3a2. La fente 4 est rectiligne et orientée parallèlement à l'axe longitudinale X lorsque la barre de toit 2a est dans sa position longitudinale. Dans la configuration représentée, l'articulation 5 comprend une vis en T 50 munie d'une tête 51 de forme rectangulaire. La tête 51 est disposée au-dessus de la paroi inférieure 21, en étant orientée perpendiculairement à la fente 4. La largeur de la tête 51 étant supérieure à la largeur de la fente 4, la barre de toit 2a vient buter contre la tête 51 lorsqu'elle se soulève. La vis 50 est par ailleurs munie d'une tige filetée 52 reçue partiellement dans la fente 4 et dans un alésage 32 formé à travers une paroi supérieure 31 du pied de fixation avant 3a2 qui fait face à la paroi inférieure 21 de la barre de toit 2a, un écrou 53 étant vissé à l'extrémité libre de la tige filetée 52, l'écrou 53 venant appuyer contre une rondelle ressort 54 disposée entre ledit écrou 53 et ladite paroi supérieure 31, plaquant ainsi la tête 51 contre la paroi inférieure 21.

L'articulation 5 comprend par ailleurs un élément de guidage 55 disposé entre la barre de toit 2a et le pied de fixation avant 3a2. Cet élément de guidage 55 est munie d'une cavité centrale 56 logeant au moins partiellement la vis 50. L'élément de guidage 55 comprend par ailleurs deux ergots 57 disposés de part et d'autre de la tête 51 de la vis 50, lesdits ergots 57 étant dimensionnés pour coulisser sans jeu à l'intérieur de la fente 4.

Ainsi configurée, l'articulation 5 permet d'assurer le déplacement de la barre de toit 2a de sa position longitudinale, représentée sur la figure 5a, à la position intermédiaire, représentée sur la figure 5b, par une rotation antihoraire de 90° de la barre de toit 2a autour de l'axe Za défini par la vis en T 50. Lors de ce déplacement, les ergots 57 de l'élément de guidage 55 ont également pivoté, tout en conservant leur position relative le long de la fente 4. Dans cette position, ils sont contigus à l'une des extrémités de la fente 4. Le déplacement de la barre de toit 2a de sa position intermédiaire, représentée sur la figure 5b, à sa position transversale, représentée sur la figure 5c, s'effectue ensuite en faisant translater la barre de toit 2a parallèlement à elle-même de telle sorte que les ergots 57 et la tête 51 viennent se positionner de manière contiguë à l'autre extrémité de la fente 4.

Le déplacement de la première barre de toit 2a vis-à-vis du pied de fixation avant 3a2, tel que décrit ci-dessus, pourra s'effectuer de manière similaire pour la deuxième barre de toit 2b vis-à-vis du pied de fixation arrière 3b1.

Toutefois, étant donné que les barres de toit 2a, 2b doivent être manipulées en même temps lors de leur déplacement de leur position longitudinale à leur position transversale, il est détaillé ci-dessous une solution avantageuse permettant de réaliser cette opération.

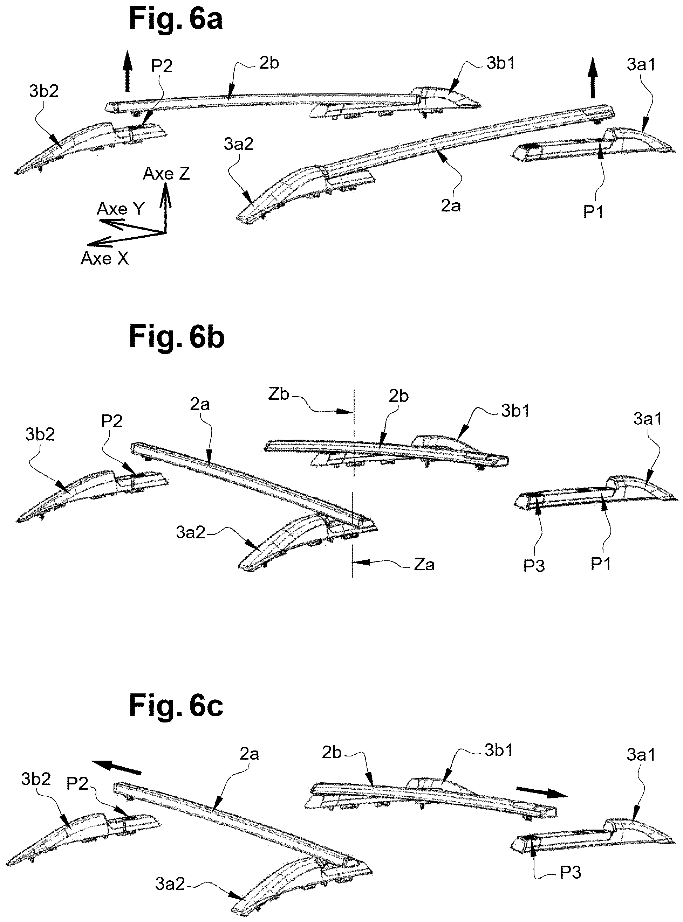

Ainsi, et comme représentées sur les figures 6a à 6d, les barres de toit 2a, 2b pourront avantageusement effectuer un mouvement de rotule autour de leur articulation de manière à les positionner dans une série de positions intermédiaires dans lesquelles elles seront correctement disposées l'une par rapport à l'autre pour permettre leur déplacement en rotation autour de leur axe de pivotement respectif Za et Zb. En effet, sans ce mouvement de rotule, les barres de toit 2a, 2b seraient alignées dans un même plan et, de ce fait, viendraient buter l'une contre l'autre lors de leur déplacement en rotation.

Une première position intermédaire, représentée sur la figure 6a, est atteinte lorsque, depuis la position représentée sur la figure 1, l'extrémité arrière de la première barre de toit 2a est soulevée pour l'éloigner selon une direction verticale Z du pied de fixation arrière 3a1 et l'extrémité avant de la deuxième barre de toit 2b est soulevée pour l'éloigner selon une direction verticale Z du pied de fixation avant 3b2.

Une deuxième position intermédaire, représentée sur la figure 6b, est atteinte lorsque, depuis la position représentée sur la figure 6a, la première barre de toit 2a est pivotée autour de l'axe de pivotement Za de manière à orienter son extrémité arrière vers le pied de fixation avant 3b2 et la deuxième barre de toit 2b est pivotée autour de l'axe de pivotement Zb de manière à orienter son extrémité avant vers le pied de fixation arrière 3a1.

Une troisième position intermédaire, représentée sur la figure 6c, est atteinte lorsque, depuis la position représentée sur la figure 6b, la première barre de toit 2a est translatée le long d'une direction transversale Y de manière à positionner son extrémité arrière au-dessus du pied de fixation avant 3b2 et la deuxième barre de toit 2b est translatée le long de la direction transversale Y de manière à positionner son extrémité avant au-dessus du pied de fixation arrière 3a1.

Une position finale, représentée sur la figure 6d, est atteinte lorsque, depuis la position représentée sur la figure 6c, l'extrémité arrière de la première barre de toit 2a est abaissée pour l'amener au contact du pied de fixation avant 3b2 et l'extrémité avant de la deuxième barre de toit 2b est abaissée pour l'amener au contact du pied de fixation arrière 3a1.

Les déplacements des barres de toit 2a et 2b illustrés sur les figures 6a à 6d sont réalisables du fait de la configuration spécifique de l'articulation 5, comme détaillée ci-dessous au vu des figures 7a à 7f.

En particulier, comme représenté sur la figure 7b, la paroi interne 58 de l'élément de guidage 55 qui entoure la cavité centrale 56 dans laquelle est logée la vis 50 possède sur une portion haute 58b, qui est située au-dessus d'une zone circulaire médiane 58a, une forme conique évasée vers le haut et sur une portion basse 58c, qui est située en dessous de ladite zone médiane 58a, une forme conique évasée vers le bas. Ainsi configurée, la paroi interne 58 de l'élément de guidage 55 forme un motif de came contre lequel vient s'appuyer la vis 50 lors du déplacement de la première barre de toit 2a, respectivement de la deuxième barre de toit 2b, de sa position longitudinale à sa position transversale et réciproquement, permettant ainsi le mouvement de rotule desdites barres de toit 2a, 2b.

Ainsi, lors du déplacement de la barre de toit 2a de sa position longitudinale représentée sur la figure 7a, à sa première position intermédiaire, représentée sur la figure 7b, l'élément de guidage 55 pivote par rapport à la vis 50 autour d'un axe perpendiculaire à l'axe longitudinal X jusqu'à ce que l'élément de guidage 55 vienne buter contre la vis 50 au niveau de sa paroi interne 58c.

Par la suite, lorsque la barre de toit 2a se déplace de sa première position intermédiaire, représentée sur la figure 7b, à sa deuxième position intermédiaire, représentée sur la figure 7c, l'élément de guidage 55 et la vis 50 pivotent ensemble par rapport au pied de fixation avant 3a2 autour de l'axe de pivotement Za, l'élément de guidage 55 étant en contact avec la vis 50 au niveau de la face interne des ergots 57. La figure 7c montre le pied de fixation avant 3a2 en coupe transversale . Cette figure permet de voir que le pied de fixation avant 3a2 est muni d'une forme en saillie 33 dépassant de sa paroi supérieure 31. La fonction de cette forme en saillie 33 sera précisée dans les paragraphes qui suivent.

Lors du déplacement de la barre de toit 2a de sa deuxième position intermédiaire, représentée sur la figure 7c, à sa troisième position intermédiaire, représentée sur la figure 7d, la barre de toit 2a est translatée par rapport au pied de fixation avant 3a2 le long de la direction transversale Y jusqu'à ce que l'ergot 57 qui est le plus externe vienne buter contre l'extrémité externe de la fente 4, l'élément de guidage 55 étant toujours en contact avec la vis 50 au niveau de sa paroi interne 58c.

Les déplacements en translation des barres de toit 2a, 2b peuvent s'effectuer grâce à un jeu dans le mécanisme de maintien qui sera décrit plus loin avec la rondelle ressort 54. Cette rondelle ressort sera mise en compression pour assurer une bonne fixation de ces barres de toit 2a, 2b dans leur position transversale.

Ensuite, lors du déplacement de la barre de toit 2a de sa troisième position intermédiaire, représentée sur la figure 7d, à sa position transversale représentée sur la figure 7e, l'élément de guidage 55 pivote par rapport à la vis 50 autour de l'axe longitudinal X jusqu'à ce que la paroi inférieure 21 de la barre de toit 2a vienne au contact de la forme en saillie 33. La paroi interne 58c de l'élément de guidage 55 n'est alors plus en contact avec la vis 50. Dans cette position, l'inclinaison de la barre de toit 2a par rapport à l'horizontale ne permet pas encore de la fixer sur le pied de fixation avant 3b2 au niveau du point de fixation P2.

Afin de fixer la barre de toit 2a en position transversale, il faut ensuite faire basculer la barre de toit 2a autour de la forme en saillie 33 de manière à ce que l'extrémité de la barre de toit 2a qui est munie de la fente 4 se soulève, créant ainsi un jeu e entre l'élément de guidage 55 et le pied de fixation avant 3a2. Ce soulèvement produit un déplacement vers le haut de la vis 50 du fait du contact entre la tête 51 et la paroi inférieure 21 de la barre de toit 2a. Ce déplacement vers le haut de la vis 50 génère une compression de la rondelle ressort 54 entre l'écrou 53 et la paroi supérieure 31 du pied de fixation avant 3a2. L'articulation 5 se trouve alors dans un état verrouillé, qui limite les risques d'une déconnexion accidentelle de la barre de toit 2a lorsqu'elle est positionnée dans sa position transversale.

Il sera envisageable de prévoir une forme en saillie 33 additionnelle au niveau du pied de fixation avant 3a2 de manière à éviter également une déconnexion accidentelle de la barre de toit 2a lorsqu'elle est positionnée dans sa position longitudinale. Cette forme en saillie 33 additionnelle pourra par exemple être perpendiculaire à l'axe longitudinale X et se situer à proximité de l'articulation 5.

En référence aux figures 8a et 8b, il est représenté un premier mode de réalisation alternatif pour l'articulation 5.

Dans ce mode de réalisation, l'articulation 5 diffère de celle représentée sur les figures 7a à 7f par le fait qu'au lieu de prévoir une forme en saillie 33 pour définir l'état verrouillé de l'articulation, la solution consiste à disposer la vis 50 de manière excentrée par rapport à un axe X' parallèle à l'axe longitudinale X et par rapport à un axe Y' perpendiculaire à l'axe longitudinal X autour duquel pivote l'élément de guidage 55 lors de la fixation de la barre de toit 2a sur le pied de fixation arrière 3a1 ou avant 3b2 respectivement dans sa position longitudinale et transversale. A cet effet, la face inférieure 59 de l'élément de guidage 55 pourra posséder une forme hémisphérique destinée à coopérer avec une forme en creux correspondante de la paroi supérieure 31 du pied de fixation avant 3a2 de manière à permettre le mouvement pivotant de l'élément de guidage 55 autour de l'axe X' ou Y'. Ainsi, lors de la fixation de la barre de toit 2a, un soulèvement de la tête 51 de la vis 50 se produit sous l'effet du déplacement vers le haut de la paroi inférieure 21 de la barre de toit 2a, ce qui aboutit à une compression de la rondelle ressort 54 entre l'écrou 53 et la paroi supérieure 31 du pied de fixation avant 3a2.

En référence aux figures 9a à 9c, 10a, 10b, 11a et 11b, il est représenté un deuxième mode de réalisation alternatif pour l'articulation 5.

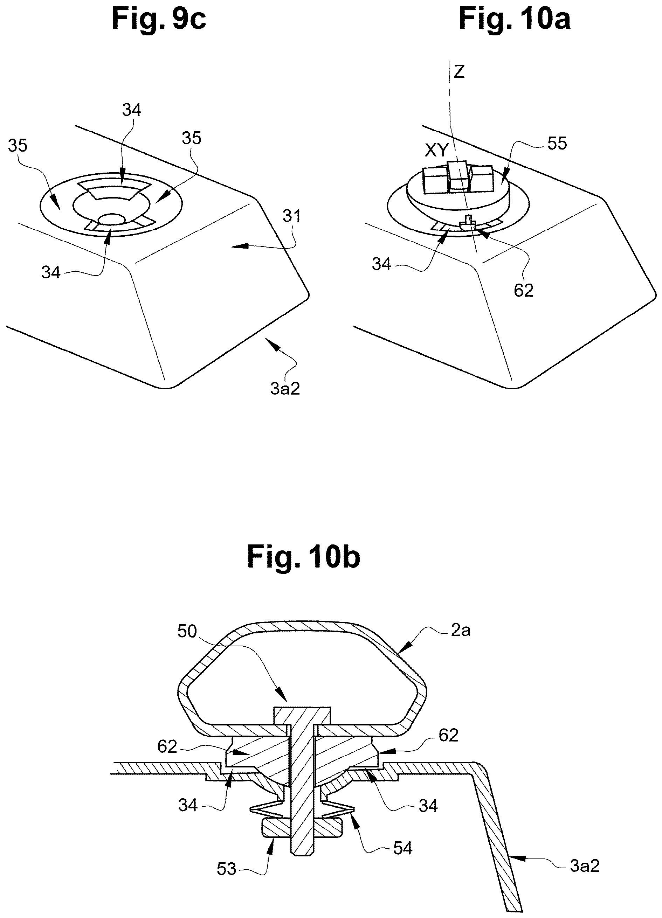

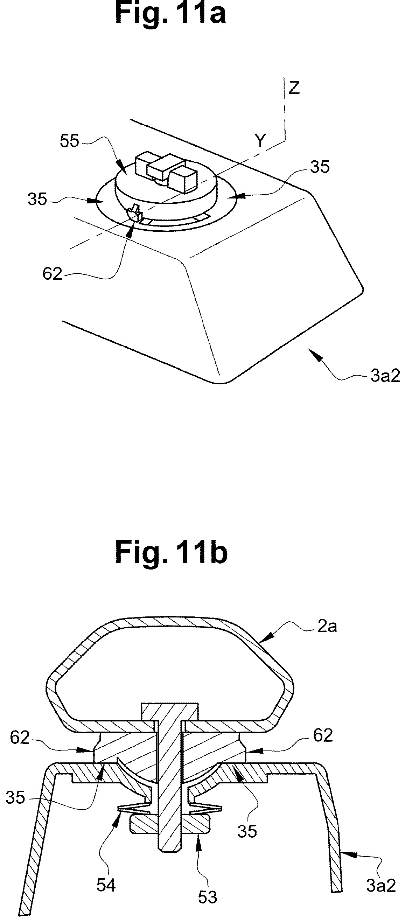

Dans ce mode de réalisation, l'articulation 5 diffère de celle représentée sur les figures 8a et 8b par le fait qu'au lieu de prévoir une position excentrée de la vis 50 pour définir l'état verrouillé de l'articulation, la solution consiste à munir l'élément de guidage 55 de deux ergots inférieurs 62 dépassant sous la face inférieure 59 de l'élément de guidage 55, comme représenté sur les figures 9a et 9b, et de munir la paroi supérieure 31 du pied de fixation avant 3a2 d'un chemin de came de forme annulaire le long duquel se déplace les ergots inférieurs 62 lors des déplacements en rotation de la barre de toit 2a. Comme représenté sur la figure 9c, le chemin de came comprend deux formes en saillie 35 séparées par deux formes en creux 34. Ainsi, comme représenté sur les figures 10a et 10b, lorsque la barre de toit 2a est dans une position intermédiaire entre sa position longitudinale et sa position transversale, les ergots inférieurs 62 sont en contact avec les formes en creux 34. L'élément de guidage 55 et la vis 50 sont dans une position basse : la rondelle ressort 54 n'est donc pas comprimée par l'écrou 53. Par contre, comme représenté sur les figures 11a et 11b, lorsque la barre de toit 2a est dans sa position longitudinale ou transversale, les ergots inférieurs 62 sont en contact avec les formes en saillie 35. L'élément de guidage 55 et la vis 50 sont dans une position haute : la rondelle ressort 54 est donc comprimée par l'écrou 53.

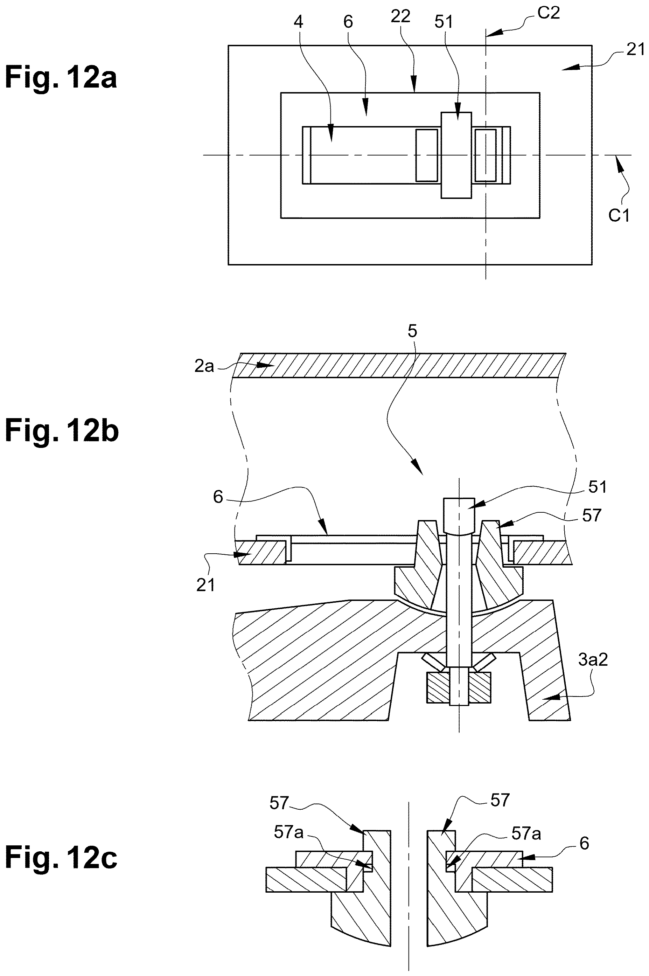

En référence aux figures 12a à 12c, il est représenté une variante de réalisation avantageuse de l'invention. Dans cette variante, une zone 22 de la paroi inférieure 21 de la première barre de toit 2a, respectivement de la deuxième barre de toit 2b, qui entoure la fente 4, est recouverte d'une pièce de recouvrement 6 formée d'un matériau à faible coefficient de frottement, tel que le polyoxyméthylène ou le polyamide 6. Cette pièce de recouvrement 6 permettra notamment de limiter les frottements de la tête 51 de la vis 50 contre la face inférieure 21 de la première barre de toit 2a, respectivement de la deuxième barre de toit 2b, lors du coulissement de l'articulation 5 le long de la fente 4. Comme représenté sur la figure 12c, la pièce de recouvrement 6 pourra avantageusement être reçue à l'intérieur de rainures 57a formées le long de la périphérie externe des ergots 57 de l'élément de guidage 55.

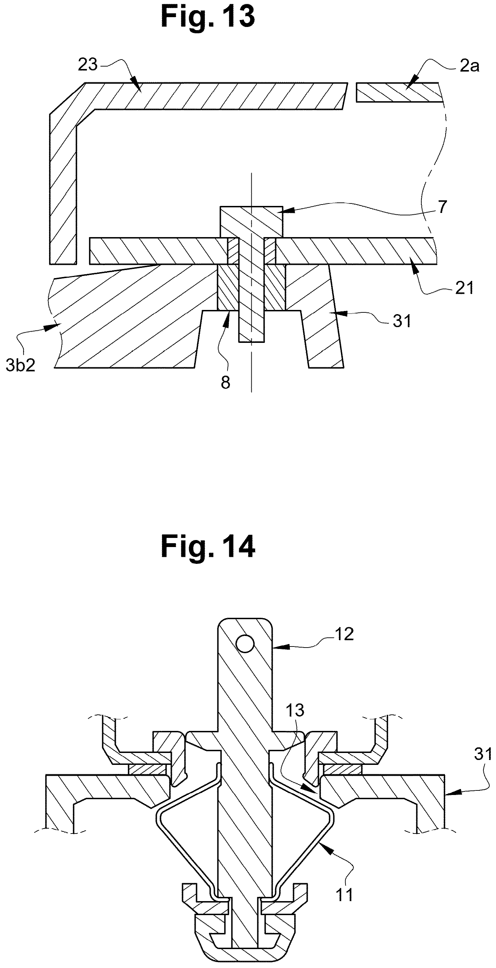

En référence à la figure 13, il est représenté une vue en coupe transversale de la barre de toit 2a au niveau de sa liaison démontable avec le pied de fixation avant 3b2 dans une variante possible de réalisation de l'invention. Dans cette variante, la barre de toit 2a comprend un organe mâle fileté 7, tel qu'une vis, et le pied de fixation avant 3b2 comprend un organe femelle fileté 8, tel qu'un écrou, destiné à coopérer avec ledit organe mâle fileté 7 de manière à assurer la fixation de la barre de toit 2a sur ledit pied de fixation avant 3b2. Cet exemple spécifique de moyens de verrouillage et de moyens de verrouillage complémentaires pourra ainsi être utilisé également pour fixer la première barre de toit 2a sur le pied de fixation arrière 3a1 dans sa position longitudinale et pour fixer la deuxième barre de toit 2b sur les pieds de fixation avant 3b2 et arrière 3a1 respectivement dans sa position longitudinale et transversale. De manière à accéder à l'organe mâle fileté 7, les barres de toit 2a et 2b pourront avantageusement être équipées de capots amovibles 23 comme représenté sur la figure 13.

En référence à la figure 14, il est représenté une variante possible de moyens de verrouillage et de moyens de verrouillage complémentaires pouvant équiper le système de l'invention. Dans cette variante, les moyens de verrouillage intégrés dans chacune des barres de toit 2a, 2b comprennent une lyre de retenue 11 et un noyau 12 asymétrique lié en rotation dans la lyre de retenue 11, et les moyens de verrouillage complémentaires des pieds de fixation 3a1 et 3b2, sur lesquels viennent se fixer lesdites barres de toit 2a, 2b, comprennent une ouverture quadrangulaire 13 formée dans la paroi supérieure 31 de chacun des pieds de fixation 3a1 et 3b2. La lyre de retenue 11 et le noyau 12 sont configurés de telle sorte que, lors de la rotation du noyau 12, la lyre de retenue 11 passe d'une position rétractée, dans laquelle elle est amovible de l'ouverture quadrangulaire 13, à une position expansée, dans laquelle elle est verrouillée dans l'ouverture quadrangulaire 13. Cette solution a notamment été décrite dans le brevet EP 3 124 328 B1.

L'invention n'est évidemment pas limitée aux modes de réalisation décrits ci-dessus. En particulier, dans un mode de réalisation envisageable, les pieds de fixation arrière et avant 3a1 et 3a2 de la première paire de pieds de fixation, respectivement les pieds de fixation arrière et avant 3b1 et 3b2 de la deuxième paire de pieds de fixation, pourront être intégrés dans une même piéce de manière à former un unique rail support.

## Revendications

1. Ensemble (1) de barre de toit comprenant :
- deux paires de pieds de fixation (3a1, 3a2 ; 3b1, 3b2), à savoir une première paire de pieds de fixation (3a1, 3a2) et une deuxième paire de pieds de fixation (3b1, 3b2), destinées à être fixées de chaque côté d'un toit de véhicule, chaque paire de pieds de fixation (3a1, 3a2 ; 3b1, 3b2) comprenant un pied de fixation arrière (3a1, 3b1) disposé à l'arrière par rapport au sens d'avance du véhicule et un pied de fixation avant (3a2, 3b2) disposé à l'avant par rapport au sens d'avance du véhicule, lesdits pieds de fixation avant et arrière (3a1, 3a2 ; 3b1, 3b2) étant parallèles à un axe longitudinal (X) défini par le véhicule,
- une paire de barres (2a, 2b), à savoir une première barre (2a) et une deuxième barre (2b), la première barre (2a), respectivement la deuxième barre (2b), étant reliée de manière pivotante à l'un des pieds de fixation (3a2) de la première paire de pieds, respectivement à l'un des pieds de fixation (3b1) de la deuxième paire de pieds, au moyen d'une articulation (5) fixée sur ledit pied de fixation (3a2, 3b1) de manière à permettre le positionnement de la première barre (2a), respectivement de la deuxième barre (2b), selon au moins deux positions d'utilisation spécifiques, respectivement une position longitudinale, dans laquelle elle est parallèle audit axe longitudinal (X), et une position transversale, dans laquelle elle est orientée perpendiculairement audit axe longitudinal (X),
dans lequel, dans sa position longitudinale, la première barre (2a), respectivement la deuxième barre (2b), est apte à être fixée de manière démontable sur le pied de fixation (3a1) de la première paire de pieds, respectivement sur le pied de fixation (3b2) de la deuxième paire de pieds, qui ne supporte pas l'articulation (5) lorsque des moyens de verrouillage de la première barre (2a), respectivement de la deuxième barre (2b), coopèrent avec des moyens de verrouillage complémentaires dudit pied de fixation (3a1, 3b2) au niveau d'un premier point de fixation (P1), respectivement d'un deuxième point de fixation (P2), et, dans sa position transversale, la première barre (2a), respectivement la deuxième barre (2b), est apte à être fixée de manière démontable sur le pied de fixation (3b2) de la deuxième paire de pieds, respectivement sur le pied de fixation (3a1) de la première paire de pieds, qui ne supporte pas l'articulation (5) lorsque lesdits moyens de verrouillage de la première barre (2a), respectivement de la deuxième barre (2b), coopèrent avec des moyens de verrouillage complémentaires dudit pied de fixation au niveau du deuxième point de fixation (P2), respectivement au niveau d'un troisième point de fixation (P3), et
dans lequel la première barre (2a), respectivement la deuxième barre (2b), est munie d'une fente (4) le long de laquelle peut coulisser son articulation (5) de telle sorte que la première barre (2a), respectivement la deuxième barre (2b), peut se déplacer à la fois en rotation et en translation par rapport au pied de fixation (3a2) de la première paire de pieds, respectivement par rapport au pied de fixation (3b1) de la deuxième paire de pieds, qui supporte ladite articulation (5), permettant ainsi auxdits moyens de verrouillage de la première barre (2a), respectivement de la deuxième barre (2b), de coopérer avec lesdits moyens de verrouillage complémentaires au niveau du premier point de fixation (P1), respectivement au niveau du deuxième point de fixation (P2), lorsqu'elle est dans sa position longitudinale, et au niveau du deuxième point de fixation (P2), respectivement du troisième point de fixation (P3), lorsqu'elle est dans sa position transversale, **caractérisé en ce que** la première barre (2a), respectivement la deuxième barre (2b), est apte à effectuer un mouvement de rotule autour de l'articulation (5), permettant ainsi à ladite première barre (2a), respectivement ladite deuxième barre (2b), de se déplacer de sa position longitudinale à sa position transversale.

2. Ensemble (1) de barre de toit selon la revendication 1, **caractérisé en ce que** la première barre (2a), respectivement la deuxième barre (2b), peut pivoter autour d'un premier axe de pivotement (Za), respectivement autour d'un deuxième axe de pivotement (Zb), qui est éloigné du premier point de fixation (P1), respectivement du deuxième point de fixation (P2), par une première distance (d1), respectivement par une deuxième distance (d2), la première distance (d1) étant inférieure à la distance (d3) séparant le premier axe de pivotement (Za) du deuxième point de fixation (P2) et la deuxième distance (d2) étant inférieure à la distance (d4) séparant le deuxième axe de pivotement (Zb) du troisième point de fixation (P3).

3. Ensemble (1) de barre de toit selon l'une des revendications précédentes, **caractérisé en ce que** l'articulation (5) de la première barre (2a), respectivement de la deuxième barre (2b), comprend une vis en T (50) munie d'une tête (51) disposée au-dessus d'une paroi inférieure (21) de la première barre (2a), respectivement de la deuxième barre (2b), dans laquelle est formée la fente (4), et d'une tige filetée (52) reçue partiellement dans la fente (4) et dans un alésage (32) formé à travers une paroi supérieure (31) du pied de fixation (3a2) de la première paire de pieds, respectivement du pied de fixation (3b1) de la deuxième paire de pieds, qui fait face à ladite paroi inférieure (21) de la première barre (2a), respectivement de la deuxième barre (2b), un écrou (53) étant vissé à l'extrémité libre de la tige filetée (52), l'écrou (53) venant appuyer contre une rondelle ressort (54) disposée entre ledit écrou (53) et ladite paroi supérieure (31), plaquant ainsi la tête (51) de la vis en T (50) contre la paroi inférieure (21) de la première barre (2a), respectivement de la deuxième barre (2b).

4. Ensemble (1) de barre de toit selon la revendication 3, **caractérisé en ce que** la vis en T (50) est logée au moins partiellement à l'intérieur d'une cavité centrale (56) d'un élément de guidage (55) disposé entre la première barre (2a), respectivement la deuxième barre (2b), et le pied de fixation (3a2) de la première paire de pieds, respectivement le pied de fixation (3b1) de la deuxième paire de pieds, qui supporte l'articulation (5), l'élément de guidage (55) comprenant au moins deux ergots (57) disposés de part et d'autre de la tête (51) de la vis en T (50) et configurés pour coulisser à l'intérieur de la fente (4), la paroi interne (58) de l'élément de guidage (55) qui entoure la cavité centrale (56) étant configurée pour permettre un pivotement de l'élément de guidage (55) par rapport à la vis en T (50) au moins autour d'un axe (Y) perpendiculaire à l'axe longitudinal (X) lorsque, la première barre (2a), respectivement la deuxième barre (2b), étant dans sa position longitudinale, les moyens de verrouillage de la première barre (2a), respectivement de la deuxième barre (2b), coopèrent avec les moyens de verrouillage complémentaires du pied de fixation (3a1) de la première paire de pieds, respectivement du pied de fixation (3b2) de la deuxième paire de pieds, qui ne supporte pas l'articulation (5), et au moins autour d'un axe parallèle à l'axe longitudinal (X) lorsque, la première barre (2a), respectivement la deuxième barre (2b), étant dans sa position transversale, les moyens de verrouillage de la première barre (2a), respectivement de la deuxième barre (2b), coopèrent avec les moyens de verrouillage complémentaires du pied de fixation (3b2) de la deuxième paire de pieds, respectivement du pied de fixation (3a1) de la première paire de pieds, qui ne supporte pas l'articulation (5).

5. Ensemble (1) de barre de toit selon la revendication 4, **caractérisé en ce que** la paroi interne (58) de l'élément de guidage (55) forme un motif de came contre lequel vient s'appuyer la vis en T (50) lors du déplacement de la première barre (2a), respectivement de la deuxième barre (2b), de sa position longitudinale à sa position transversale et réciproquement.

6. Ensemble (1) de barre de toit selon la revendication 4 ou 5, **caractérisé en ce que** le pied de fixation (3a2) de la première paire de pieds, respectivement le pied de fixation (3b1) de la deuxième paire de pieds, qui supporte l'articulation (5), est muni d'au moins une forme en saillie (33) dépassant de sa paroi supérieure (31), ladite au moins une forme en saillie (33) formant une butée contre laquelle vient reposer la paroi inférieure (21) de la première barre (2a), respectivement de la deuxième barre (2b), lorsque ladite première barre (2a), respectivement ladite deuxième barre (2b), est fixée sur l'un des pieds de fixation (3b2, 3a1) qui ne supporte pas d'articulation (5), la fixation de la première barre (2a), respectivement de la deuxième barre (2b), générant un pivotement de ladite première barre (2a), respectivement de ladite deuxième barre (2b), autour de ladite au moins une forme en saillie (33) et, par voie de conséquence, un soulèvement de la tête (51) de la vis en T (50) sous l'effet du déplacement vers le haut de la paroi inférieure (21) de la première barre (2a), respectivement de la deuxième barre (2b), ce qui aboutit à une compression de la rondelle ressort (54) entre l'écrou (53) et la paroi supérieure (31) du pied de fixation (3a2) de la première paire de pieds, respectivement du pied de fixation (3b1) de la deuxième paire de pieds, qui supporte l'articulation (5).

7. Ensemble (1) de barre de toit selon la revendication 4 ou 5, **caractérisé en ce que** la vis en T (50) est disposée de manière excentrée par rapport l'axe (X', Y') autour duquel pivote l'élément de guidage (55) lors de la fixation de la première barre (2a), respectivement de la deuxième barre (2b), sur l'un des pieds de fixation (3b2, 3a1) qui ne supporte pas d'articulation (5), la fixation de ladite première barre (2a), respectivement de ladite deuxième barre (2b), générant un soulèvement de la tête (51) de la vis en T (50) sous l'effet du déplacement vers le haut de la paroi inférieure (21) de la première barre (2a), respectivement de la deuxième barre (2b), ce qui aboutit à une compression de la rondelle ressort (54) entre l'écrou (53) et la paroi supérieure (31) du pied de fixation (3a2) de la première paire de pieds, respectivement du pied de fixation (3b1) de la deuxième paire de pieds, qui supporte l'articulation (5).

8. Ensemble (1) de barre de toit selon la revendication 4 ou 5, **caractérisé en ce que** le pied de fixation (3a2) de la première paire de pieds, respectivement le pied de fixation (3b1) de la deuxième paire de pieds, qui supporte l'articulation (5) est muni d'au moins une forme en saillie et/ou en creux (34, 35) au niveau de sa paroi supérieure (31), ladite au moins une forme en saillie et/ou en creux (34, 35) formant un chemin de came le long duquel peut se déplacer au moins un ergot inférieur (62) dépassant d'une face inférieure (59) de l'élément de guidage (55), le déplacement de la première barre (2a), respectivement de la deuxième barre (2b), de sa position longitudinale à sa position transversale et réciproquement génère un déplacement vers le haut et/ou vers le bas de l'élément de guidage (55) lorsque ledit au moins un ergot inférieur (61) se déplace le long dudit chemin de came, ce qui, du fait du contact d'une face supérieure (61) de l'élément de guidage (55) avec la paroi inférieure (21) de la première barre (2a), respectivement de la deuxième barre (2b), produit un soulèvement et/ou un abaissement de ladite première barre (2a), respectivement de ladite deuxième barre (2b), et, par voie de conséquence, un soulèvement de la tête (51) de la vis en T (50), lequel aboutit à une compression de la rondelle ressort (54) entre l'écrou (53) et la paroi supérieure (31) du pied de fixation (3a2) de la première paire de pieds, respectivement du pied de fixation (3b1) de la deuxième paire de pieds, qui supporte l'articulation (5).

9. Ensemble (1) de barre de toit selon l'une des revendications 4 à 8, **caractérisé en ce qu'**une zone (22) de la paroi inférieure (21) de la première barre (2a), respectivement de la deuxième barre (2b), qui entoure au moins partiellement la fente (4), est recouverte d'une pièce de recouvrement (6) formée d'un matériau à faible coefficient de frottement, ladite pièce de recouvrement (6) permettant notamment de limiter les frottements entre la tête (51) de la vis en T (50) et la première barre (2a), respectivement la deuxième barre (2b), lors du coulissement de l'articulation (5) le long de la fente (4).

10. Ensemble (1) de barre de toit selon la revendication 9, **caractérisé en ce que** le matériau constitutif de la pièce de recouvrement (6) est choisi parmi le polyoxyméthylène et le polyamide 6.

11. Ensemble (1) de barre de toit selon la revendication 9 ou 10, **caractérisé en ce que** la pièce de recouvrement (6) est logée partiellement à l'intérieur d'au moins une rainure (57a) formée le long de la périphérie externe d'un des ergots (57) de l'élément de guidage (55).

12. Ensemble (1) de barre de toit selon l'une des revendications précédentes, **caractérisé en ce que** les moyens de verrouillage de la première barre (2a), respectivement de la deuxième barre (2b), comprennent un organe mâle fileté (7), tel qu'une vis, et les moyens de verrouillage complémentaires du pied de fixation (3a1, 3b2), sur lequel vient se fixer ladite première barre (2a), respectivement ladite deuxième barre (2b), comprennent un organe femelle fileté (8), tel qu'un écrou.

13. Ensemble (1) de barre de toit selon l'une des revendications 1 à 11, **caractérisé en ce que** les moyens de verrouillage de la première barre (2a), respectivement de la deuxième barre (2b), comprennent une lyre de retenue (11) et un noyau (12) asymétrique lié en rotation dans la lyre de retenue (11), et les moyens de verrouillage complémentaires du pied de fixation (3a1, 3b2), sur lequel vient se fixer ladite première barre (2a), respectivement ladite deuxième barre (2b), comprennent une ouverture quadrangulaire (13) formée dans la paroi supérieure dudit pied de fixation (3a1, 3b2), lesdits moyens de verrouillage étant configurés de telle sorte que, lors de la rotation du noyau (12), la lyre de retenue (11) passe d'une position rétractée, dans laquelle elle est amovible de l'ouverture quadrangulaire (13), à une position expansée, dans laquelle elle est verrouillée dans l'ouverture quadrangulaire (13).

## Patentansprüche

1. Dachstangenbaugruppe (1), umfassend:
- zwei Paar Befestigungsfüße (3a1, 3a2; 3b1, 3b2), d. h. ein erstes Paar Befestigungsfüße (3a1, 3a2) und ein zweites Paar Befestigungsfüße (3b1, 3b2), die zur Befestigung auf jeder Seite eines Fahrzeugdaches bestimmt sind, jedes Paar Befestigungsfüße (3a1, 3a2; 3b1, 3b2) umfassend einen in Fahrtrichtung hinten angeordneten hinteren Befestigungsfuß (3a1, 3b1) und einen in Fahrtrichtung vorne angeordneten vorderen Befestigungsfuß (3a2, 3b2), wobei die vorderen und hinteren Befestigungsfüße (3a1, 3a2; 3b1, 3b2) parallel zu einer Längsachse (X) sind, die durch das Fahrzeug definiert ist,
- ein Paar Stangen (2a, 2b), d. h. eine erste Stange (2a) und eine zweite Stange (2b), wobei die erste Stange (2a) bzw. die zweite Stange (2b) mittels eines am Befestigungsfuß (3a2, 3b1) befestigten Gelenks (5) schwenkbar mit einem der Befestigungsfüße (3a2) des ersten Fußpaares bzw. mit einem der Befestigungsfüße (3b1) des zweiten Fußpaares verbunden ist, sodass die Positionierung der ersten Stange (2a) bzw. der zweiten Stange (2b) in mindestens zwei spezifischen Gebrauchspositionen, nämlich einer Längsposition, in der sie parallel zu der Längsachse (X) ist, bzw. einer Querposition, in der sie senkrecht zur Längsachse (X) ausgerichtet ist, ermöglicht wird,
wobei die erste Stange (2a) bzw. die zweite Stange (2b) in ihrer Längsposition demontierbar am Befestigungsfuß (3a1) des ersten Fußpaares bzw. am Befestigungsfuß (3b2) des zweiten Fußpaares, der das Gelenk (5) nicht trägt, befestigt werden kann, wenn Verriegelungsmittel der ersten Stange (2a) bzw. der zweiten Stange (2b) mit komplementären Verriegelungsmitteln des Befestigungsfußes (3a1, 3b2) an einem ersten Befestigungspunkt (P1) bzw. an einem zweiten Befestigungspunkt (P2) zusammenwirken, und die erste Stange (2a) bzw. die zweite Stange (2b) in ihrer Querposition demontierbar am Befestigungsfuß (3b2) des zweiten Fußpaares bzw. am Befestigungsfuß (3a1) des ersten Fußpaares, der das Gelenk (5) nicht trägt, befestigt werden kann, wenn die Verriegelungsmittel der ersten Stange (2a) bzw. der zweiten Stange (2b) mit komplementären Verriegelungsmitteln des Befestigungsfußes am zweiten Befestigungspunkt (P2) bzw. an einem dritten Befestigungspunkt (P3) zusammenwirken, und
wobei die erste Stange (2a) bzw. die zweite Stange (2b) mit einem Schlitz (4) versehen ist, entlang dem ihr Gelenk (5) verschiebbar ist, so dass die erste Stange (2a) bzw. die zweite Stange (2b) sich sowohl in Drehung als auch in Translation gegenüber dem Befestigungsfuß (3a2) des ersten Fußpaares bzw. gegenüber dem Befestigungsfuß (3b1) des zweiten Fußpaares, der das Gelenk (5) trägt, bewegen kann, wodurch die Verriegelungsmittel der ersten Stange (2a) bzw. der zweiten Stange (2b) mit den komplementären Verriegelungsmitteln an dem ersten Befestigungspunkt (P1) bzw. an dem zweiten Befestigungspunkt (P2) zusammenwirken können, wenn sie sich in ihrer Längsposition befindet, und im Bereich des zweiten Befestigungspunkts (P2) bzw. des dritten Befestigungspunkts (P3), wenn sie sich in ihrer Querposition befindet, **dadurch gekennzeichnet, dass** die erste Stange (2a) bzw. die zweite Stange (2b) eine Kugelgelenkbewegung um das Gelenk (5) ausführen kann, wodurch sich die erste Stange (2a) bzw. die zweite Stange (2b) von ihrer Längsposition in ihre Querposition bewegen kann.

2. Dachstangenbaugruppe (1) nach Anspruch 1, **dadurch gekennzeichnet, dass** die erste Stange (2a) bzw. die zweite Stange (2b) um eine erste Schwenkachse (Za) bzw. um eine zweite Schwenkachse (Zb) schwenkbar ist, die vom ersten Befestigungspunkt (P1) bzw. vom zweiten Befestigungspunkt (P2) um einen ersten Abstand (d1) bzw. um einen zweiten Abstand (d2) entfernt ist, wobei der erste Abstand (d1) kleiner ist als der Abstand (d3), der die erste Schwenkachse (Za) vom zweiten Befestigungspunkt (P2) trennt, und der zweite Abstand (d2) kleiner ist als der Abstand (d4), der die zweite Schwenkachse (Zb) vom dritten Befestigungspunkt (P3) trennt.

3. Dachstangenbaugruppe (1) nach einem der vorhergehenden Ansprüche, **dadurch gekennzeichnet, dass** das Gelenk (5) der ersten Stange (2a) bzw. der zweiten Stange (2b) eine T-Schraube (50) umfasst, die mit einem Kopf (51), der oberhalb einer unteren Wand (21) der ersten Stange (2a) bzw. der zweiten Stange (2b) angeordnet ist, in der der Schlitz (4) ausgebildet ist, und mit einer Gewindestange (52) versehen ist, die teilweise im Schlitz (4) und in einer Bohrung (32) aufgenommen ist, die durch eine obere Wand (31) des Befestigungsfußes (3a2) des ersten Fußpaares bzw. des Befestigungsfußes (3b1) des zweiten Fußpaares ausgebildet ist, die der unteren Wand (21) der ersten Stange (2a) bzw. der zweiten Stange (2b) zugewandt ist, wobei eine Mutter (53) auf das freie Ende der Gewindestange (52) geschraubt ist, wobei die Mutter (53) gegen eine Federscheibe (54) drückt, die zwischen der Mutter (53) und der oberen Wand (31) angeordnet ist, wodurch der Kopf (51) der T-Schraube (50) gegen die untere Wand (21) der ersten Stange (2a) bzw. der zweiten Stange (2b) presst.

4. Dachstangenbaugruppe (1) nach Anspruch 3, **dadurch gekennzeichnet, dass** die T-Schraube (50) mindestens teilweise innerhalb eines zentralen Hohlraums (56) eines Führungselements (55) gelagert ist, das zwischen der ersten Stange (2a) bzw. der zweiten Stange (2b) und dem Befestigungsfuß (3a2) des ersten Fußpaars bzw. dem Befestigungsfuß (3b1) des zweiten Fußpaars, der das Gelenk (5) trägt, angeordnet ist, wobei das Führungselement (55) mindestens zwei Nasen (57) umfasst, die auf beiden Seiten des Kopfes (51) der T-Schraube (50) angeordnet und so eingerichtet sind, dass sie innerhalb des Schlitzes (4) gleiten, wobei die innere Wand (58) des Führungselements (55), die den zentralen Hohlraum (56) umgibt, so eingerichtet ist, dass sie ein Schwenken des Führungselements (55) in Bezug auf die T-Schraube (50) um mindestens eine Achse (Y) senkrecht zur Längsachse (X) ermöglicht, wenn sich die erste Stange (2a) bzw. die zweite Stange (2b) in ihrer Längsposition befindet, wobei die Verriegelungsmittel der ersten Stange (2a) bzw. der zweiten Stange (2b) mit den komplementären Verriegelungsmitteln des Befestigungsfußes (3a1) des ersten Fußpaares bzw. des Befestigungsfußes (3b2) des zweiten Fußpaares, der das Gelenk (5) nicht trägt, zusammenwirken, und um mindestens eine Achse parallel zur Längsachse (X), wenn sich die erste Stange (2a) bzw. die zweite Stange (2b) in ihrer Querposition befindet, wobei die Verriegelungsmittel der ersten Stange (2a) bzw. der zweiten Stange (2b) mit den komplementären Verriegelungsmitteln des Befestigungsfußes (3b2) des zweiten Fußpaares bzw. des Befestigungsfußes (3a1) des ersten Fußpaares, der das Gelenk (5) nicht trägt, zusammenwirken.

5. Dachstangenbaugruppe (1) nach Anspruch 4, **dadurch gekennzeichnet, dass** die innere Wand (58) des Führungselements (55) ein Nockenmuster bildet, gegen das sich die T-Schraube (50) beim Bewegen der ersten Stange (2a) bzw. der zweiten Stange (2b) von seiner Längsposition in seine Querposition und umgekehrt stützt.

6. Dachstangenbaugruppe (1) nach Anspruch 4 oder 5, **dadurch gekennzeichnet, dass** der Befestigungsfuß (3a2) des ersten Fußpaares bzw. der Befestigungsfuß (3b1) des zweiten Fußpaares, der das Gelenk (5) trägt, mit mindestens einer aus seiner oberen Wand (31) herausragenden Form (33) versehen ist, wobei die mindestens eine herausragende Form (33) einen Anschlag bildet, an dem die untere Wand (21) der ersten Stange (2a) bzw. der zweiten Stange (2b) anliegt, wenn die erste Stange (2a) bzw. die zweite Stange (2b) an einem der Befestigungsfüße (3b2, 3a1) befestigt ist, der kein Gelenk (5) trägt, wobei die Befestigung der ersten Stange (2a) bzw. der zweiten Stange (2b) ein Schwenken der ersten Stange (2a) bzw. der zweiten Stange (2b) um die mindestens eine vorstehende Form (33) und folglich ein Anheben des Kopfes (51) der T-Schraube (50) durch die Aufwärtsbewegung der unteren Wand (21) der ersten Stange (2a) bzw. der zweiten Stange (2b) erzeugt, was zu einer Kompression der Federscheibe (54) zwischen der Mutter (53) und der oberen Wand (31) des Befestigungsfußes (3a2) des ersten Fußpaares bzw. des Befestigungsfußes (3b1) des zweiten Fußpaares, der das Gelenk (5) trägt, führt.

7. Dachstangenbaugruppe (1) nach Anspruch 4 oder 5, **dadurch gekennzeichnet, dass** die T-Schraube (50) exzentrisch zur Achse (X', Y') angeordnet ist, um die das Führungselement (55) schwenkt, wenn die erste Stange (2a) bzw. die zweite Stange (2b) an einem der Befestigungsfüße (3b2, 3a1), der kein Gelenk (5) trägt, befestigt wird, wobei die Befestigung der ersten Stange (2a) bzw. der zweiten Stange (2b) ein Anheben des Kopfes (51) der T-Schraube (50) durch die Aufwärtsbewegung der unteren Wand (21) der ersten Stange (2a) bzw. der zweiten Stange (2b) erzeugt, was zu einer Kompression der Federscheibe (54) zwischen der Mutter (53) und der oberen Wand (31) des Befestigungsfußes (3a2) des ersten Fußpaares bzw. des Befestigungsfußes (3b1) des zweiten Fußpaares, der das Gelenk (5) trägt, führt.

8. Dachstangenbaugruppe (1) nach Anspruch 4 oder 5, **dadurch gekennzeichnet, dass** der Befestigungsfuß (3a2) des ersten Fußpaares bzw. der Befestigungsfuß (3b1) des zweiten Fußpaares, der das Gelenk (5) trägt, an seiner oberen Wand (31) mit mindestens einer vorstehenden und/oder vertieften Form (34, 35) versehen ist, wobei die mindestens eine vorstehende und/oder vertiefte Form (34, 35) einen Nockenweg bildet, entlang dessen sich mindestens eine untere Nase (62), die von einer Unterseite (59) des Führungselements (55) vorsteht, bewegen kann, wobei die Bewegung der ersten Stange (2a) bzw. der zweiten Stange (2b) von ihrer Längsposition in ihre Querposition und umgekehrt eine Aufwärts- und/oder Abwärtsverschiebung des Führungselements (55) erzeugt, wenn sich die mindestens eine untere Nase (61) entlang des Nockenwegs bewegt, was durch den Kontakt einer Oberseite (61) des Führungselements (55) mit der unteren Wand (21) der ersten Stange (2a) bzw. der zweiten Stange (2b) ein Anheben und/oder Absenken der ersten Stange (2a) bzw. der zweiten Stange (2b) bewirkt, und folglich ein Anheben des Kopfes (51) der T-Schraube (50), was zu einer Kompression der Federscheibe (54) zwischen der Mutter (53) und der oberen Wand (31) des Befestigungsfußes (3a2) des ersten Fußpaares bzw. des Befestigungsfußes (3b1) des zweiten Fußpaares, der das Gelenk (5) trägt, führt.

9. Dachstangenbaugruppe (1) nach einem der Ansprüche 4 bis 8, **dadurch gekennzeichnet, dass** ein Bereich (22) der unteren Wand (21) der ersten Stange (2a) bzw. der zweiten Stange (2b), der den Schlitz (4) mindestens teilweise umgibt, mit einem aus einem Material mit niedrigem Reibwert ausgebildeten Abdeckteil (6) abgedeckt ist, wobei das Abdeckteil (6) insbesondere die Reibung zwischen dem Kopf (51) der T-Schraube (50) und der ersten Stange (2a) bzw. der zweiten Stange (2b) beim Verschieben des Gelenks (5) entlang des Schlitzes (4) begrenzen kann.

10. Dachstangenbaugruppe (1) nach Anspruch 9, **dadurch gekennzeichnet, dass** das Material, aus dem das Abdeckteil (6) besteht, aus Polyoxymethylen und Polyamid 6 ausgewählt ist.

11. Dachstangenbaugruppe (1) nach Anspruch 9 oder 10, **dadurch gekennzeichnet, dass** das Abdeckteil (6) teilweise innerhalb mindestens einer Nut (57a) gelagert ist, die entlang des äußeren Umfangs einer der Nasen (57) des Führungselements (55) ausgebildet ist.

12. Dachstangenbaugruppe (1) nach einem der vorhergehenden Ansprüche, **dadurch gekennzeichnet, dass** die Verriegelungsmittel der ersten Stange (2a) bzw. der zweiten Stange (2b) ein Außengewindeelement (7), wie eine Schraube, umfassen und die komplementären Verriegelungsmittel des Befestigungsfußes (3a1, 3b2), an dem die erste Stange (2a) bzw. die zweite Stange (2b) befestigt ist, ein Innengewindeelement (8), wie eine Mutter, umfassen.

13. Dachstangenbaugruppe (1) nach einem der Ansprüche 1 bis 11, **dadurch gekennzeichnet, dass** die Verriegelungsmittel der ersten Stange (2a) bzw. der zweiten Stange (2b) einen Haltebalken (11) und einen asymmetrischen Kern (12) umfassen, der drehbar im Haltebalken (11) verbunden ist, und die komplementären Verriegelungsmittel des Befestigungsfußes (3a1, 3b2), an dem die erste Stange (2a) bzw. die zweite Stange (2b) befestigt wird, eine in der oberen Wand des Befestigungsfußes (3a1, 3b2) ausgebildete viereckige Öffnung (13) umfassen, wobei die Verriegelungsmittel so eingerichtet sind, dass beim Drehen des Kerns (12) den Haltebalken (11) von einer eingefahrenen Position, in der er aus der viereckigen Öffnung (13) herausnehmbar ist, in eine expandierte Position, in der er in der viereckigen Öffnung (13) verriegelt ist, übergeht.

## Claims

1. A roof bar assembly (1) comprising:
- two pairs of fixing feet (3a1, 3a2; 3b1, 3b2), namely a first pair of fixing feet (3a1, 3a2) and a second pair of fixing feet (3b1, 3b2), intended to be fixed on each side of a vehicle roof, each pair of fixing feet (3a1, 3a2; 3b1, 3b2) comprising a rear fixing foot (3a1, 3b1) arranged at the rear relative to the direction of travel of the vehicle and a front fixing foot (3a2, 3b2) arranged at the front relative to the direction of travel of the vehicle, said front and rear fixing feet (3a1, 3a2; 3b1, 3b2) being parallel to a longitudinal axis (X) defined by the vehicle,
- a pair of bars (2a, 2b), namely a first bar (2a) and a second bar (2b), the first bar (2a), respectively the second bar (2b), being pivotally connected to one of the fixing feet (3a2) of the first pair of feet, respectively to one of the fixing feet (3b1) of the second pair of feet, by means of a hinge (5) fixed to said fixing foot (3a2, 3b1) so as to allow the positioning of the first bar (2a), respectively the second bar (2b), in at least two specific use positions, respectively a longitudinal position, in which it is parallel to said longitudinal axis (X), and a transverse position, in which it is oriented perpendicular to said longitudinal axis (X),
in which, in its longitudinal position, the first bar (2a), respectively the second bar (2b), is capable of being removably fixed to the fixing foot (3a1) of the first pair of feet, respectively on the fixing foot (3b2) of the second pair of feet, which does not support the hinge (5) when locking means of the first bar (2a), respectively of the second bar (2b), cooperate with complementary locking means of said fixing foot (3a1, 3b2) at a first fixing point (P1), respectively of a second fixing point (P2), and, in its transverse position, the first bar (2a), respectively the second bar (2b), is capable of being fixed in a removably manner on the fixing foot (3b2) of the second pair of feet, respectively on the fixing foot (3a1) of the first pair of feet, which does not support the hinge (5) when said locking means of the first bar (2a), respectively of the second bar (2b), cooperate with complementary locking means of said fixing foot at the second fixing point (P2), respectively at a third fixing point (P3), and
in which the first bar (2a), respectively the second bar (2b), is provided with a slot (4) along which its hinge (5) can slide such that the first bar (2a), respectively the second bar (2b), can be displaced both in rotation and in translation relative to the fixing foot (3a2) of the first pair of feet, respectively relative to the fixing foot (3b1) of the second pair of feet, which supports said hinge (5), thus allowing said locking means of the first bar (2a), respectively of the second bar (2b), to cooperate with said complementary locking means at the first fixing point (P1), respectively at the second fixing point (P2), when it is in its longitudinal position, and at the second fixing point (P2), respectively of the third fixing point (P3), when in its transverse position, **characterized in that** the first bar (2a), respectively the second bar (2b), is capable of performing a ball-joint movement around the hinge (5), thus allowing said first bar (2a), respectively said second bar (2b), to be displaced from its longitudinal position to its transverse position.

2. The roof bar assembly (1) according to claim 1, **characterized in that** the first bar (2a), respectively the second bar (2b), can pivot about a first pivot axis (Za), respectively about a second pivot axis (Zb), which is distant from the first fixing point (P1), respectively from the second fixing point (P2), by a first distance (d1), respectively by a second distance (d2), the first distance (d1) being less than the distance (d3) separating the first pivot axis (Za) from the second fixing point (P2) and the second distance (d2) being less than the distance (d4) separating the second pivot axis (Zb) from the third fixing point (P3).

3. The roof bar assembly (1) according to any of the preceding claims, **characterized in that** the hinge (5) of the first bar (2a), respectively of the second bar (2b), comprises a T-bolt (50) provided with a head (51) arranged above a lower wall (21) of the first bar (2a), respectively of the second bar (2b), in which the slot (4) is formed, and a threaded rod (52) partially received in the slot (4) and in a bore (32) formed through an upper wall (31) of the fixing foot (3a2) of the first pair of feet, respectively of the fixing foot (3b1) of the second pair of feet, which faces said lower wall (21) of the first bar (2a), respectively of the second bar (2b), a nut (53) being screwed onto the free end of the threaded rod (52), the nut (53) bearing against a spring washer (54) arranged between said nut (53) and said upper wall (31), thus pressing the head (51) of the T-bolt (50) against the lower wall (21) of the first bar (2a), respectively of the second bar (2b).

4. The roof bar assembly (1) according to claim 3, **characterized in that** the T-bolt (50) is housed at least partially inside a central cavity (56) of a guide element (55) arranged between the first bar (2a), respectively the second bar (2b), and the fixing foot (3a2) of the first pair of feet, respectively the fixing foot (3b1) of the second pair of feet, which supports the hinge (5), the guide element (55) comprising at least two lugs (57) arranged on either side of the head (51) of the T-bolt (50) and configured to slide inside the slot (4), the inner wall (58) of the guide element (55) which surrounds the central cavity (56) being configured to allow a pivoting of the guide element (55) relative to the T-bolt (50) at least about an axis (Y) perpendicular to the longitudinal axis (X) when, the first bar (2a), respectively the second bar (2b), being in its longitudinal position, the locking means of the first bar (2a), respectively the second bar (2b), cooperate with the complementary locking means of the fixing foot (3a1) of the first pair of feet, respectively of the fixing foot (3b2) of the second pair of feet, which does not support the hinge (5), and at least about an axis parallel to the longitudinal axis (X) when, the first bar (2a), respectively the second bar (2b), being in its transverse position, the locking means of the first bar (2a), respectively the second bar (2b), cooperate with the complementary locking means of the fixing foot (3b2) of the second pair of feet, respectively of the fixing foot (3a1) of the first pair of feet, which does not support the hinge (5).

5. The roof bar assembly (1) according to claim 4, **characterized in that** the inner wall (58) of the guide element (55) forms a cam pattern against which the T-bolt (50) bears when the first bar (2a), respectively the second bar (2b), is displaced from its longitudinal position to its transverse position and vice versa.

6. The roof bar assembly (1) according to claim 4 or 5, **characterized in that** the fixing foot (3a2) of the first pair of feet, respectively the fixing foot (3b1) of the second pair of feet, which supports the hinge (5), is provided with at least one projecting shape (33) protruding from its upper wall (31), said at least one projecting shape (33) forming a stop against which the lower wall (21) of the first bar (2a), respectively of the second bar (2b), rests, when said first bar (2a), respectively said second bar (2b), is fixed on one of the fixing feet (3b2, 3a1) which does not support a hinge (5), the fixing of the first bar (2a), respectively of the second bar (2b), generating a pivoting of said first bar (2a), respectively of said second bar (2b), about said at least one projecting shape (33) and, consequently, a lifting of the head (51) of the T-bolt (50) under the effect of the upward displacement of the lower wall (21) of the first bar (2a), respectively of the second bar (2b), which results in a compression of the spring washer (54) between the nut (53) and the upper wall (31) of the fixing foot (3a2) of the first pair of feet, respectively of the fixing foot (3b1) of the second pair of feet, which supports the hinge (5).

7. The roof bar assembly (1) according to claim 4 or 5, **characterized in that** the T-bolt (50) is arranged eccentrically relative to the axis (X', Y') about which the guide element (55) pivots when fixing the first bar (2a), respectively the second bar (2b), on one of the fixing feet (3b2, 3a1) which does not support a hinge (5), the fixing of said first bar (2a), respectively said second bar (2b), generating a lifting of the head (51) of the T-bolt (50) under the effect of the upward displacement of the lower wall (21) of the first bar (2a), respectively the second bar (2b), which results in compression of the spring washer (54) between the nut (53) and the upper wall (31) of the fixing foot (3a2) of the first pair of feet, respectively of the fixing foot (3b1) of the second pair of feet, which supports the hinge (5).

8. The roof bar assembly (1) according to claim 4 or 5, **characterized in that** the fixing foot (3a2) of the first pair of feet, respectively the fixing foot (3b1) of the second pair of feet, which supports the hinge (5) is provided with at least one projecting and/or recessed shape (34, 35) at its upper wall (31), said at least one projecting and/or recessed shape (34, 35) forming a cam path along which at least one lower lug (62) protruding from a lower face (59) of the guide element (55) can be displaced, the displacement of the first bar (2a), respectively of the second bar (2b), from its longitudinal position to its transverse position and vice versa generates an upward and/or downward displacement of the guide element (55) when said at least one lower lug (61) is displaced along said cam path, which, due to the contact of an upper face (61) of the guide element (55) with the lower wall (21) of the first bar (2a), respectively of the second bar (2b), produces a lifting and/or a lowering of said first bar (2a), respectively of said second bar (2b), and, consequently, a lifting of the head (51) of the T-bolt (50), which results in a compression of the spring washer (54) between the nut (53) and the upper wall (31) of the fixing foot (3a2) of the first pair of feet, respectively of the fixing foot (3b1) of the second pair of feet, which supports the hinge (5).

9. The roof bar assembly (1) according to any of claims 4 to 8, **characterized in that** an area (22) of the lower wall (21) of the first bar (2a), respectively of the second bar (2b), which at least partially surrounds the slot (4), is covered with a covering part (6) made of a material with a low coefficient of friction, said covering part (6) making it possible in particular to limit the friction between the head (51) of the T-bolt (50) and the first bar (2a), respectively the second bar (2b), during the sliding of the hinge (5) along the slot (4).

10. The roof bar assembly (1) according to claim 9, **characterized in that** the material constituting the covering part (6) is selected from polyoxymethylene and polyamide 6.

11. The roof bar assembly (1) according to claim 9 or 10, **characterized in that** the covering part (6) is housed partially inside at least one groove (57a) formed along the outer periphery of one of the lugs (57) of the guide element (55).

12. The roof bar assembly (1) according to any of the preceding claims, **characterized in that** the locking means of the first bar (2a), respectively of the second bar (2b), comprise a threaded male member (7), such as a screw, and the complementary locking means of the fixing foot (3a1, 3b2), on which said first bar (2a), respectively said second bar (2b), is fixed, comprise a threaded female member (8), such as a nut.

13. The roof bar assembly (1) according to any of claims 1 to 11, **characterized in that** the locking means of the first bar (2a), respectively of the second bar (2b), comprise a retaining clip (11) and an asymmetrical core (12) rotatably connected in the retaining clip (11), and the complementary locking means of the fixing foot (3a1, 3b2), on which said first bar (2a), respectively said second bar (2b) is fixed, comprise a quadrangular opening (13) formed in the upper wall of said fixing foot (3a1, 3b2), said locking means being configured such that, upon rotation of the core (12), the retaining clip (11) moves from a retracted position, in which it is removable from the quadrangular opening (13), to an expanded position, in which it is locked within the quadrangular opening (13).
